# EUROPÄISCHE PATENTSCHRIFT

(11) **EP 2 715 188 B1**
(45) Veröffentlichungstag und Bekanntmachung des Hinweises auf die Patenterteilung: **20.11.2019**
(21) Anmeldenummer: 12724126.3
(22) Anmeldetag: 25.05.2012
(51) Int. Cl.: F16H 25/24, F16D 1/10, F16D 3/02, F16D 65/18, B62D 5/04, F16D 125/40, F16D 65/56

(54) **GEWINDETRIEB**
spindle drive
entraînement à vis

(30) Priorität: 01.06.2011 DE 102011050814
(43) Veröffentlichungstag der Anmeldung: 09.04.2014
(73) Patentinhaber: SFS Intec Holding AG, 9435 Heerbrugg (CH)
(72) Erfinder: KUSTER, Hanspeter, CH-9436 Balgach (CH)
(86) Internationale Anmeldenummer: PCT/EP2012/059828
(87) Internationale Veröffentlichungsnummer: WO 2012/163825

(56) Entgegenhaltungen:
- WO-A1-2011/018304
- DE-A1-102009 036 886
- DE-A1-102010 063 300
- US-A- 4 836 338

## Beschreibung

Die Erfindung betrifft eine Gewindespindel mit einem Antriebsteil, der eine Längsachse aufweist und durch ein erstes Lager gelagert ist, und mit einem Gewindeteil, der ebenfalls eine Längsachse aufweist, und mit einer Gewindemutter, die durch ein zweites Lager gelagert ist und in der der Gewindeteil geführt ist.

Eine solche Gewindespindel mit Gewindemutter ist im Stand der Technik üblicherweise als ein Kugelgewindetrieb ausgebildet, der im Bereich Klappen- und Türöffnungssysteme und vor allem im Bereich Fahrzeuge Verwendung finden kann. Bei Fahrzeugen kann er z. B. in der Fahrzeugbremse eingesetzt werden. Dabei wird der Antriebsteil mit Hilfe eines Elektromotors in Drehung versetzt. Dadurch wird eine Längsbewegung der Gewindemutter erzeugt, die einen Bremskolben betätigt und so als Feststellvorrichtung für die Fahrzeugbremse wirkt. Der Gewindeteil steht mit der Gewindemutter über Kugeln in Kontakt. Bei einer aus dem Dokument DE 101 50 803 A1 bekannten Spindel- / Kugelumlaufbüchsenanordnung, also bei einem solchen Kugelgewindetrieb kann es beim Zurückfahren der Gewindemutter zu einem Verklemmen zwischen Gewindemutter und Gewindespindel kommen. Um das zu verhindern, ist es aus dem Dokument WO 99/45292 A1 bekannt, die Gewindemutter auf ihrer dem Antriebsteil benachbarten Stirnseite mit einem Vorsprung zu versehen, welcher an einem an dem Antriebsteil ausgebildeten, in Umfangsrichtung wirkenden Anschlag zur Anlage und somit in eine bestimmte Ausrichtung zu dem Gewinde der Gewindespindel bringbar ist.

Das Dokument US 5 711 709 A zeigt in den Fig. 2 und Fig. 3 zwar eine Gewindespindel mit einem Antriebsteil, der eine Längsachse aufweist, und mit einem Gewindeteil, der ebenfalls eine Längsachse aufweist, und mit einer Gewindemutter, in der der Gewindeteil geführt ist, wobei der Antriebsteil und der Gewindeteil als separate Teile ausgebildet sind, die durch Zusammenstecken gelenkig miteinander verbunden sind, so dass ein gegenseitiger radialer Versatz oder Neigungswinkel der Längsachsen des Antriebsteils und des Gewindeteils kompensierbar ist, trotzdem ist jedoch nicht auszuschließen, dass der Kugelgewindetrieb im Einsatz klemmt.

Ein Hauptproblem liegt bei solchen Kugelgewindetrieben nämlich darin, dass bei einer Fehlausrichtung der beiden Lager oder bei einem Verzug der Gewindespindel, also bei einem gegenseitigen radialen Versatz oder Neigungswinkel der Längsachsen des Antriebsteils und des Gewindeteils, der Kugelgewindetrieb im Einsatz klemmen und so an der Erfüllung seines Einsatzzweckes gehindert sein kann, einem wesentlich erhöhten Verschleiß unterliegen kann und einen verschlechterten Wirkungsgrad aufweisen kann.

Die US 4,836,338 offenbart einen Gewindetrieb, der durch ein Hohlzahnrad in Drehung versetzt werden kann. Das Hohlzahnrad und das Ende des Gewindetriebes tragen je eine Keilverzahnung, so dass der Gewindetrieb drehfest in das Hohlrad hineingesteckt werden kann. Eine axiale Fehlausrichtung zwischen dem Gewindetrieb und dem Hohlrad kann dabei geduldet werden.

Aus der DE 10 2009 036 886 A1 ist ein Kugelgewindetrieb bekannt, bei dem ein Anschlag für das umfangsseitige Anschlagen einer Gewindemutter in einer Anschlagsposition vorgesehen ist.

Aufgabe der Erfindung ist es, eine Gewindespindel der eingangs genannten Art so auszubilden, dass sich die mit einem Verzug der Gewindespindel verbundenen Nachteile vermeiden oder zumindest stark reduzieren lassen.

Ausgegangen wird hierbei von einer Gewindespindel, deren Antriebsteil (mit Längsachse A) und deren Gewindeteil (mit Längsachse B) als separate Teile ausgebildet sind, welche jeweils mit wenigstens einem Kopplungselement versehen sind und die durch Zusammenstecken gelenkig miteinander verbindbar oder verbunden sind, so dass ein gegenseitiger radialer Versatz (V) oder Neigungswinkel (a) der Längsachsen (A, B) des Antriebsteils und des Gewindeteils kompensierbar ist.

Erfindungsgemäss werden die Kopplungselemente jeweils nach Art einer Keilnutverzahnung ausgebildet, so dass im zusammengesteckten Zustand beide Verzahnungen miteinander kämmen und dass für das Zusammenstecken von Antriebsteil und Gewindeteil ein Raster für mehrere Steckpositionen vorhanden ist. Dadurch können der Antriebsteil und der Gewindeteil in unterschiedlich radial versetzten Positionen zusammengesteckt werden.

Die zweiteilige Ausbildung der Gewindespindel beseitigt oder reduziert zumindest die Größe und die nachteilige Auswirkung von Querkräften, die bei einem Verzug einer einteiligen Gewindespindel auftreten können, durch die Schaffung einer Pendelmöglichkeit zwischen Antriebs- und Gewindeteil der Gewindespindel. Querkräfte, die im Stand der Technik bei einem Verzug der Gewindespindel auftreten und dazu führen können, dass sich Gewindespindel und Gewindemutter verklemmen, sind bei der Gewindespindel nach der Erfindung von vorn herein ausgeschlossen, weil der Antriebsteil und der Gewindeteil jeweils für sich in der Lage sind, Querkräfte aufzunehmen und so ein Verklemmen zu verhindern. Gleichzeitig wird durch die erfindungsgemässe Ausbildung der Gewindespindel deren Verschleiß verringert. Außerdem wird in dem Antriebsstrang zwischen Elektromotor, Antriebsteil, Gewindeteil und Gewindemutter ein höherer Wirkungsgrad erzielt, weil Verluste aufgrund von Reibung od. dgl. bei der Gewindespindel nach der Erfindung wesentlich geringer sind als bei bekannten Gewindespindeln nach dem oben beschriebenen Stand der Technik.

Vorteilhafte Ausgestaltungen der Erfindung bilden die Gegenstände der Unteransprüche.

In einer Ausgestaltung der Gewindespindel nach der Erfindung weist die Gewindemutter wenigstens ein axial wirkendes Anschlagelement auf, das in einer Anschlagposition mit wenigstens einem axial wirkenden Anschlagelement des Antriebsteils zusammenwirkt. In dieser Ausgestaltung sind die axial wirkenden Anschlagelemente der Gewindemutter und des Antriebsteils in bestimmter Beziehung zu dem Gewindeanfang und zur Gewindesteigung ausgebildet. Dadurch ist in beiden Drehrichtungen zwischen der Gewindemutter und dem Antriebsteil stets ein Abstand vorhanden, der das oben geschilderte Verklemmen zwischen Gewindemutter und Gewindespindel verhindert, auch wenn die Längsachsen von Antriebsteil und Gewindeteil einen Winkel miteinander bilden sollten.

In einer weiteren Ausgestaltung der Gewindespindel nach der Erfindung berühren die Anschlagelemente einander auch bei einem radialen Versatz der beiden Längsachsen in der Anschlagposition und es besteht zwischen einer Stirnseite der Gewindemutter und einem Anschlagkopf des Antriebsteils mindestens ein geringer Abstand.

In einer weiteren Ausgestaltung der Gewindespindel nach der Erfindung sind die Anschlagelemente in mindestens einem Kreisring angeordnet, dessen beide Durchmesser größer als ein Gewindeaußendurchmesser des Gewindeteils bzw. kleiner als ein Außendurchmesser der Gewindemutter sind. So werden die Anschlagelemente in einem Umfangsbereich gehalten, in welchem sie ihre optimale Wirkung hinsichtlich der Aufrechterhaltung eines axialen Abstands zur Vermeidung des Klemmens erfüllen können.

In einer weiteren Ausgestaltung der Gewindespindel nach der Erfindung ist das Anschlagelement an dem Antriebsteil oder Gewindeteil ein Nocken od. dgl. Das ergibt eine einfache Ausbildung für ein axial wirkendes Anschlagelement.

In einer weiteren Ausgestaltung der Gewindespindel nach der Erfindung weist das Gewinde des Gewindeteils eine Steigung auf, welche größer als eine Höhe des Nockens ist. Das dient zusätzlich zur Gewährleistung, dass kein Verklemmen auftreten kann.

In einer weiteren Ausgestaltung der Gewindespindel nach der Erfindung steht der Nocken von einer Stirnfläche des Antriebsteils vor und weist radial eine Anschlagfläche auf und an der Gewindemutter ist eine korrespondierende Anschlagvertiefung angebracht, oder umgekehrt. Beim Zurückdrehen der Gewindemutter wird so der Nocken des Antriebsteils von der Anschlagvertiefung der Gewindemutter aufgenommen, oder umgekehrt, um einen Anschlag zu bilden, der in Umfangsrichtung wirksam ist.

In einer weiteren Ausgestaltung der Gewindespindel nach der Erfindung ist der Nocken so angebracht, dass in zusammengestecktem Zustand zwischen dem Antriebsteil und dem Gewindeteil 360° vor der Anschlagposition eine Montagedistanz zwischen dem Antriebsteil und der Gewindemutter geringfügig größer ist als die Steigung des Gewindes der Gewindemutter. Durch diese Ausgestaltung wird auf einfache Weise sichergestellt, dass eine Mindestdistanz zwischen Antriebsteil und Gewindemutter auch beim Zurückdrehen des Antriebsteils erhalten bleibt.

In einer weiteren Ausgestaltung der Gewindespindel nach der Erfindung ist das Gewinde ein Kugelgewinde oder ein anderes reibungsarmes Gewinde. Das erbringt den erwünschten Vorteil, dass die Gewindemutter mit dem Gewindeteil sehr leichtgängig in Eingriff ist.

In einer weiteren Ausgestaltung der Gewindespindel nach der Erfindung sind die Kopplungselemente mit geringem Spiel ausgelegt. Dadurch wird der am Ende vorhandene axiale Abstand zwischen Gewindemutter und Antriebsteil besser vorhersagbar.

In einer weiteren Ausgestaltung der Gewindespindel nach der Erfindung weist das Kopplungselement des Antriebsteils einen Sprengring als Verliersicherung auf. So lässt sich auf einfache Weise verhindern, dass sich der Antriebsteil und der Gewindeteil ungewollt voneinander trennen.

Ein Sicherheitssystem mit einer Gewindespindel nach der Erfindung oder in einer der oben dargelegten Ausgestaltungen hat einen einfachen, bewährten und zuverlässigen Aufbau.

In einer Ausgestaltung des Sicherheitssystems handelt es sich um ein Bremssystem für ein Fahrzeug. In diesem Fall dient der Antriebsstrang, der über Elektromotor, Antriebsteil, Gewindeteil und Gewindemutter zu dem ansonsten hydraulisch betätigten Bremskolben führt, als sogenannte Parkbremse.

In einer weiteren Ausgestaltung des Sicherheitssystems handelt es sich um ein Lenksystem für ein Fahrzeug. Der Aufbau des Antriebsstranges zum Betätigen der Lenkung entspricht dem des vorgenannten Antriebsstranges.

Ausführungsbeispiele der Erfindung werden im Folgenden unter Bezugnahme auf die Zeichnungen näher beschrieben. Es zeigt
- Fig. 1: in einer Längsschnittansicht ein erstes Ausführungsbeispiel einer Gewindespindel nach der Erfindung,
- Fig. 2: die Gewindespindel nach Fig. 1 in einer Längsseitenansicht,
- Fig. 3: in einer Längsseitenansicht als eine Einzelheit den Antriebsteil der Gewindespindel nach den Fig. 1 und 2,
- Fig. 4: den Antriebsteil nach Fig. 3 in einer Ansicht von links in Fig. 3,
- Fig. 5: in einer Längsseitenansicht eine weitere Ausführungsform des Antriebsteils der Gewindespindel nach den Fig. 1 und 2,
- Fig. 6: den Antriebsteil nach Fig. 5 in einer Ansicht von links in Fig. 5,
- Fig. 7: in einer Längsseitenansicht den Gewindeteil der Spindelmutter nach den Fig. 1 und 2 in teilweise aufgebrochenem Zustand, um ein Kopplungselement sichtbar zu machen, wobei in Fig. 7 das Gewinde des Antriebsteils nur angedeutet ist,
- Fig. 8: eine Ansicht des Gewindeteils nach Fig. 7 in einer Ansicht von rechts in Fig. 7,
- Fig. 9: in einer Längsseitenansicht eine weitere Ausführungsform des Antriebsteils der Spindelmutter nach den Fig. 1 und 2, die wiederum teilweise aufgebrochen dargestellt ist, um ein Kopplungselement sichtbar zu machen, wobei das Gewinde des Gewindeteils dargestellt ist,
- Fig. 10: eine Ansicht des Gewindeteils nach Fig. 9 in einer Ansicht von rechts in Fig. 9,
- Fig. 11: in einer Längsschnittansicht eine erste Ausführungsform der Gewindemutter der Gewindespindel nach den Fig. 1 und 2,
- Fig. 12: die Gewindemutter nach Fig. 11 in einer Ansicht von rechts in Fig. 11,
- Fig. 13: in einer Längsschnittansicht eine zweite Ausführungsform der Gewindemutter der Gewindespindel nach den Fig. 1 und 2,
- Fig. 14: die Gewindemutter nach Fig. 13 in einer Ansicht von rechts in Fig. 13,
- Fig. 15: in einer Längsseitenansicht eine dritte Ausführungsform der Gewindemutter,
- Fig. 16: die Gewindemutter nach Fig. 15 in einer Ansicht von rechts in Fig. 15,
- Fig. 17: in einer Längsschnittansicht eine zweite Ausführungsform der Gewindespindel nach der Erfindung, die sich von der Ausführungsform nach den Fig. 1 und 2 in der Ausbildung des Gewindes und eines zweiten Lagers unterscheidet, und
- Fig. 18: die Gewindespindel nach Fig. 17 in einer vereinfachten Längsseitenansicht (ohne Lager).

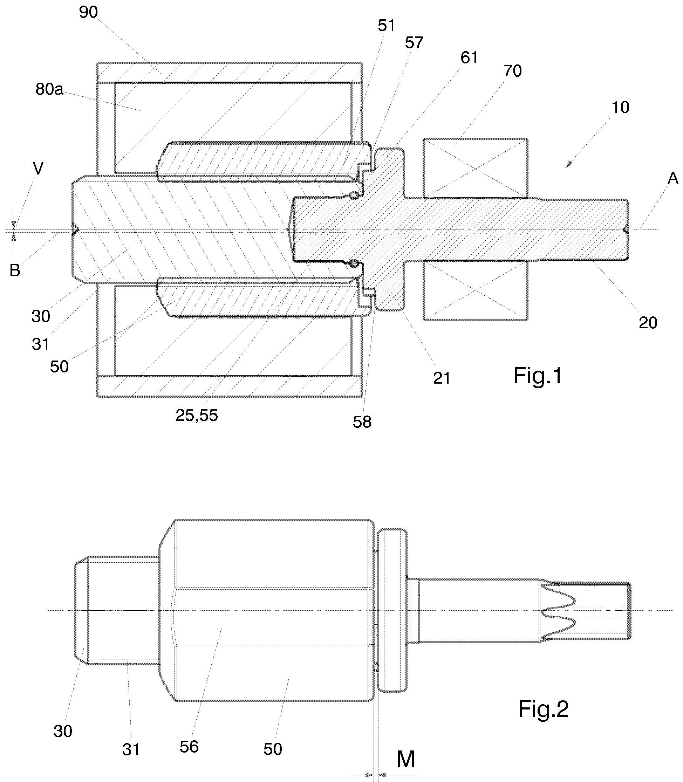

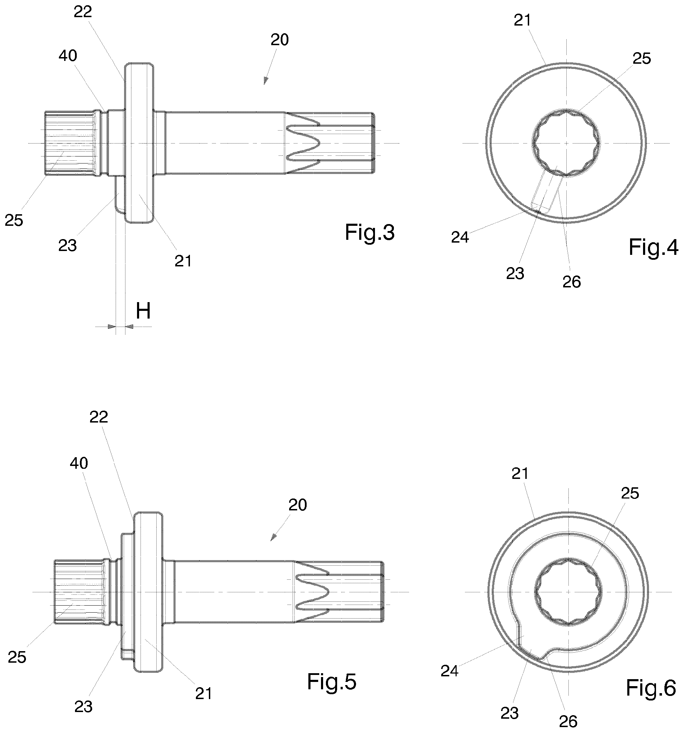

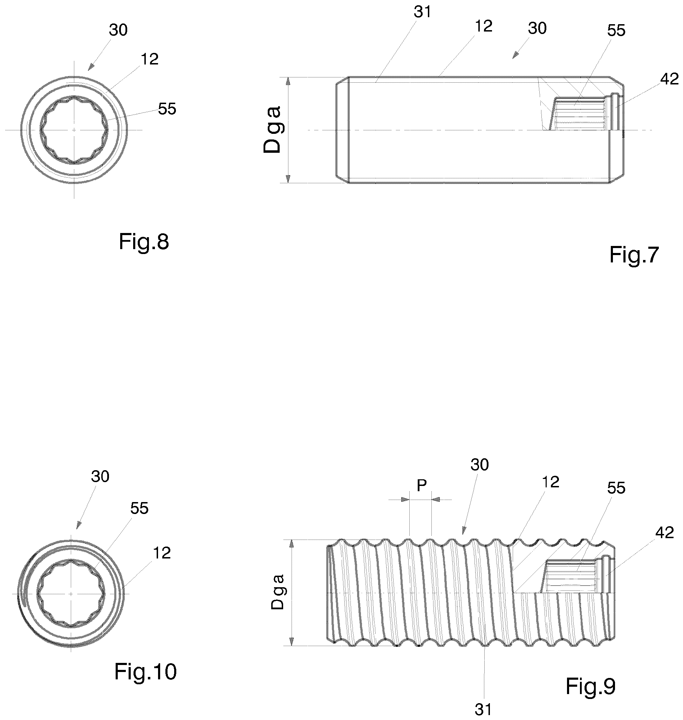

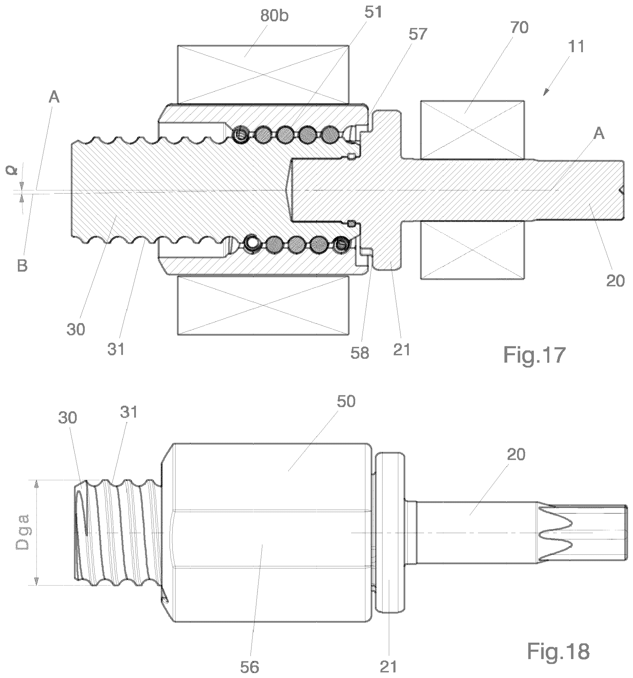

In Fig. 1 ist in einer Längsschnittansicht eine erste Ausführungsform einer Gewindespindel nach der Erfindung gezeigt, die insgesamt mit 10 bezeichnet ist. Die Gewindespindel 10 umfasst einen Antriebsteil 20, der eine Längsachse A aufweist und durch ein erstes Lager 70 gelagert ist, und einen Gewindeteil 30, der eine Längsachse B aufweist, sowie eine Gewindemutter 50, die durch ein zweites Lager 80a gelagert ist und in der der Gewindeteil 30 geführt ist. Für das zweite Lager gibt es wenigstens zwei Ausführungsformen, von denen eine erste Ausführungsform in Fig. 1 gezeigt und mit 80a bezeichnet ist und eine zweite Ausführungsform in Fig. 17 gezeigt und mit 80b bezeichnet ist. Gemäß der Darstellung in Fig. 1 haben der Gewindeteil 30 und die Gewindemutter 50 jeweils ein Gewinde 31 bzw. 51, die in gegenseitigem Eingriff sind. Das Gewinde 31 ist ein Außengewinde, das Gewinde 51 ist ein Innengewinde. Der Antriebsteil 20 und der Gewindeteil 30 sind als separate Teile ausgebildet, welche jeweils mit einem Kopplungselement 25 (Fig. 3 und 4) bzw. 55 (Fig. 7 und 9) versehen sind. Die Kopplungselemente 25, 55 sind durch Zusammenstecken gelenkig miteinander verbindbar, so dass ein gegenseitiger radialer Versatz V (Fig. 1) oder ein gegenseitiger Neigungswinkel α (Fig. 17) der Längsachsen A, B des Antriebsteils 20 bzw. des Gewindeteils 30 kompensierbar ist. Durch die Gelenkigkeit oder Pendelmöglichkeit, die der Antriebsteil 20 und der Gewindeteil 30 in zusammengestecktem Zustand bieten, lassen sich Querkräfte aufnehmen, so dass ein gegenseitiger radialer Versatz V oder Neigungswinkel α kompensierbar ist, was weiter unten noch näher beschrieben ist. Wenn der Antriebsteil 20 und der Gewindeteil 30 genau koaxial fluchtend angeordnet wären, wäre ihr gegenseitiger radialer Versatz V null. Gleiches gälte für den Neigungswinkel a, wenn der Antriebsteil 20 und der Gewindeteil 30 genau kollinear angeordnet wären.

Die Kopplungselemente 25, 55 sind jeweils nach Art einer Keilnutverzahnung ausgebildet. In zusammengestecktem Zustand von Antriebsteil 20 und Gewindeteil 30 kämmen beide Verzahnungen miteinander. Für das Zusammenstecken von Antriebsteil 20 und Gewindeteil 30 ist ein Raster für mehrere Steckpositionen vorhanden. Der Antriebsteil 20 und der Gewindeteil 30 können also in unterschiedlich radial versetzten Positionen zusammengesteckt werden. Die Kopplungselemente 25, 55 sind mit geringem gegenseitigen Spiel ausgelegt. Das Kopplungselement 25 des Antriebsteils 20 weist einen Sprengring 61 als eine Verliersicherung auf. Der Antriebsteil 20 hat eine Nut 40 (Fig. 3 und 5) zur Aufnahme des Sprengringes 61. Eine entsprechende Nut 42 (Fig. 7 und 9) hat der Gewindeteil 30. Die Montage des Sprengringes 61 erfolgt dabei folgendermaßen: Der Sprengring 61 wird in die Nut 40 des Antriebsteils 20 eingesetzt. Die Nut 40 ist etwa so tief wie die radiale Dicke des Sprengrings 61. Der in die Nut 40 eingesetzte Sprengring 61 steht aber im entspannten Zustand aus der Nut 40 hervor. Bei dem Einführen des Antriebsteils 20 in den Gewindeteil 30 wird der Sprengring 61 in der Nut 40 des Antriebsteils 20 zusammengedrückt. Anschließend erweitert sich der Sprengring 61 wieder und rastet zusätzlich in der Nut 42 des Gewindeteils 30 ein. Nun ist der Sprengring 61, der wieder seinen ursprünglichen Durchmesser hat, in beide Nuten 40, 42 eingebaut und bildet so die Verliersicherung.

Das Lager 70 ist üblicherweise als ein Wälzlager ausgebildet. Dieses Wälzlager könnte als ein Radial- und Axial-Wälzlager ausgebildet sein. Es könnte aber auch zwischen dem Lager 70 und einem Anschlagkopf 21 des Antriebsteils 20 ein Axiallager eingefügt werden, welches axiale Kräfte aufnimmt und sich an dem Lager 70 oder einem Gehäuseteil, welcher das Lager 70 trägt, axial abstützt. Das Lager 80a bei der Gewindemutter 50 ist als ein Führungs- oder Schublager ausgeführt. Die Gewindemutter 50 kann nur eine Verschiebebewegung in Achsrichtung ausführen. Wenigstens eine an der Gewindemutter 50 gebildete Fläche 56 (Fig. 2), die mit einer komplementären Fläche an dem Lager 80a zusammenwirkt, hindert die Gewindemutter 50 an einer Drehung.

Das zweite Lager 80a oder 80b ist eine Führung für die Gewindemutter 50. Bei der in Fig. 1 gezeigten ersten Ausführungsform des zweiten Lagers 80a ist das Lager als eine Büchse ausgebildet, die sich auf der in Fig. 1 linken Stirnseite über die benachbarte Stirnseite der Gewindemutter 50 erstreckt. Das Lager 80a ist seinerseits in einem Führungsteil 90 verschiebbar gelagert, das stationär ausgebildet ist. Bei dem Einsatz der Gewindespindel 10 in einer Fahrzeugbremse, wie sie in dem eingangs erwähnten Dokument WO 99/45292 A1 gezeigt ist, würde die Gewindemutter 50 zusammen mit dem Lager 80a ein Betätigungselement der Bremse bilden. Bei der Gewindespindel 11 nach Fig. 17 würde die Gewindemutter 50 allein das Betätigungselement bilden, denn das zweite Lager 80b ist stationär ausgebildet.

Der Anschlagkopf 21 des Antriebsteils 20 wirkt mit einer benachbarten Stirnseite 58 der Gewindemutter 50 auf im Folgenden näher beschriebene Weise zusammen.

Wenn der Antriebsteil 20 durch einen Elektromotor (nicht dargestellt) od.dgl. in einer Richtung in Drehung versetzt wird, wird über die Kopplungselemente 25, 55, die gemäß der Darstellung in Fig. 1 in Eingriff sind, die Gewindemutter 50 in Fig. 1 nach links bewegt, bis ein durch das Lager 80a betätigtes Teil, z.B. der Bremskolben einer Fahrzeugbremse, eine gewünschte Position erreicht hat, in der die Bremse angezogen ist. Diese gewünschte Position ist in Fig. 1 nicht gezeigt. Wird der Elektromotor od.dgl. in umgekehrter Richtung betätigt, wird die Gewindemutter 50 zusammen mit dem Lager 80a auf dem Gewindeteil 30 in die in Fig. 1 gezeigte Position zurückbewegt. Kritisch ist, dass es beim Zurückdrehen zwischen dem Antriebsteil 20 und der Gewindemutter 50 zwischen deren in gegenseitige Anlage kommenden Stirnseiten 57, 58 zu einem Verklemmen kommen kann, so dass die durch das Betätigen des Gewindeteils 30 mittels des Antriebsteils 20 einmal hergestellte Position, in der die Stirnseiten 57, 58 aneinander anliegen, nicht ohne Problem wieder aufgehoben werden kann.

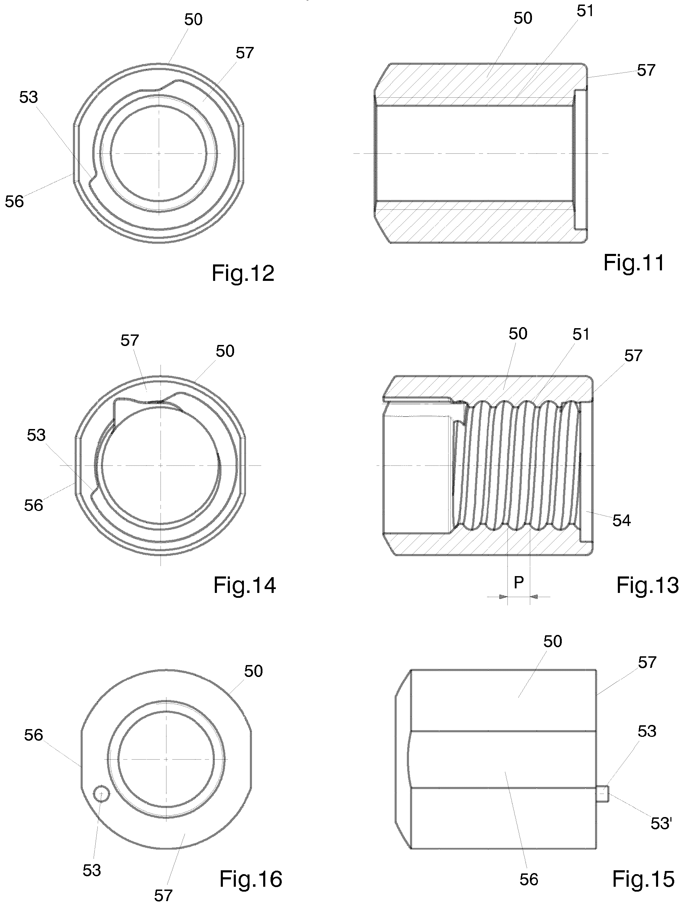

Zur Beseitigung dieses Problems weist die Gewindemutter 50 in Fig. 1 rechts an ihrer Stirnseite 57 ein Anschlagelement 53 auf. Für das Anschlagelement 53 gibt es verschiedene Ausbildungsmöglichkeiten, von denen drei in den Fig. 11 -16 gezeigt sind, auf die weiter unten näher eingegangen wird. In der Anschlagposition wirkt das Anschlagelement 53 mit einem in Umfangsrichtung wirkenden Anschlagelement 23 des Antriebsteils 20 zusammen. Für dessen Ausbildung gibt es mehrere Möglichkeiten, von denen zwei in den Fig. 4-6 gezeigt sind, auf die weiter unten näher eingegangen wird.

Wichtig ist, dass auch bei einem radialen Versatz V der Längsachsen A und B des Antriebs- und des Gewindeteils die Anschlagelemente 23, 53 einander berühren und zwischen der Stirnseite 57 der Gewindemutter 50 und der Stirnseite 58 des Anschlagkopfes 21 des Antriebsteils 20 mindestens ein geringer Abstand besteht.

Die Anschlagelemente 23, 53 sind in einem Kreisring angeordnet, dessen beide Durchmesser größer als ein Gewindeaußendurchmesser D_{ga} des Gewindeteils 30 (Fig. 18) bzw. kleiner als ein Außendurchmesser Dₘₐ der Gewindemutter 50 sind. Das Anschlagelement 23 oder 53 an dem Antriebsteil 20 bzw. an der Gewindemutter 50 ist ein Nocken 24 oder 53'. Der Nocken 24 hat eine Höhe H. Das Gewinde 12 des Gewindeteils 30 weist ebenso wie das Gewinde 51 der Gewindemutter 50 eine Steigung P auf, welche größer als die Höhe H des Nockens 24 ist. Der Nocken 24 steht von einer Stirnfläche des Antriebsteils 20 vor und weist radial eine Anschlagfläche 26 auf (Fig. 6). An der Gewindemutter 50 ist eine korrespondierende Anschlagvertiefung 54 angebracht (Fig. 11 und 13). Die Anordnung könnte auch umgekehrt sein, das heißt Anschlagfläche und Nocken könnten miteinander vertauscht werden. Der Nocken 24 ist so angebracht, dass im zusammengesteckten Zustand zwischen dem Antriebsteil 20 und dem Gewindeteil 30 360° vor der Anschlagposition eine Montagedistanz M (Fig. 2) zwischen dem Antriebsteil 20 und der Gewindemutter 50 geringfügig größer ist als die Steigung P des Gewindes 12 des Gewindeteils 30 oder des Gewindes 51 der Gewindemutter 50 (Fig. 9 bzw. 13). Über die Montage mit dem Sprengring 61 wird die Position des Anschlagelements 23 oder 53 in Bezug zur Gewindesteigung P definiert.

Wenn die Gewindemutter 50 in die in Fig. 1 gezeigte Anschlagposition zurückgefahren worden ist, können die Gewindemutter 50 und der Antriebsteil 20 gegenseitig verklemmt sein, weil ihre Stirnseiten 57 und 58 fest aneinander anliegen. Die Reibung zwischen den beiden Stirnseiten 57 58 kann so groß werden, dass der Elektromotor diese nicht voneinander lösen kann. Zwischen den beiden Stirnseiten 57, 58 ist deshalb ein Vorsprung wie der erwähnte Nocken 24 angeordnet, welcher einen gewissen Mindestabstand in dieser Position gewährleistet und so ein Verklemmen zwischen der Gewindespindel 10 und der Gewindemutter 50 verhindert.

Dem Nocken 24 ist die Anschlagvertiefung 54 zugeordnet, die in der Stirnseite 57 der Gewindemutter 50 gebildet ist. Beim Zurückdrehen des Antriebsteils 20 kommt der Nocken 24 an einer Seitenfläche der Anschlagvertiefung 54 in Anschlag, bevor die Stirnseite 57 mit der Stirnseite 58 an dem Anschlagkopf 21 in Berührung kommt. So wird ein Anschlag in Umfangsrichtung gebildet, der ein Verklemmen zwischen der Gewindemutter 50 und der Gewindespindel 10 verhindert. Der Anschlagkopf 21 ist an dem Antriebsteil 20 angeformt, wie es in Fig. 1 zu erkennen ist.

Die in den Fig. 17 und 18 dargestellte und insgesamt mit 11 bezeichnete zweite Ausführungsform der Gewindespindel nach der Erfindung unterscheidet sich von der ersten Ausführungsform nach den Fig. 1 und 2 hauptsächlich dadurch, dass das Innengewinde 51 der Gewindemutter 50 und das Außengewinde 31 des Gewindeteils 30 jeweils als ein Kugelumlaufgewinde ausgebildet sind und dass das zweite Lager 80b stationär ausgebildet ist. Die Funktion und der Aufbau des Kugelumlaufgewindes sind herkömmlich und brauchen daher nicht näher beschrieben zu werden.

Die Teilung der Gewindespindel 10 in den Antriebsteil 20 und den Gewindeteil 30 ergibt, nochmals kurz zusammengefasst, folgende Vorteile:
- Höherer Wirkungsgrad
- Längere Lebensdauer, da geringerer Verschleiß
- Aufnahme von Querkräften aufgrund der Pendelmöglichkeit zwischen Antriebsteil 20 und Gewindeteil 30
- Reduktion der Querkräfte aufgrund der Pendelfunktion
- Niedrigere Herstellungskosten
- Längere Lebensdauer
- Höhere Belastbarkeit.

### Bezugszeichenliste

- 10: Gewindespindel (1. Ausführungsform)
- 11: Gewindespindel (2. Ausführungsform)
- 12: Gewinde
- 20: Antriebsteil
- 21: Anschlagkopf
- 23: Anschlagelement
- 24: Nocken
- 25: Kopplungselement
- 26: Anschlagfläche
- 30: Gewindeteil
- 31: Außengewinde
- 40: Nut
- 42: Nut
- 50: Gewindemutter
- 51: Gewinde der Gewindemutter
- 53: Anschlagelement
- 53': Nocken
- 54: Anschlagvertiefung
- 55: Kopplungselement
- 56: Fläche
- 57: Stirnseite
- 58: Stirnseite
- 61: Sprengring
- 70: erstes Lager
- 80a: zweites Lager (1. Ausführungsorm)
- 80b: zweites Lager (2. Ausführungsform)
- 90: Führungsteil
- A: Längsachse
- B: Längsachse
- H: Nockenhöhe
- M: Montagedistanz
- P: Steigung
- α: Neigungswinkel
- Dₘₐ: Außendurchmesser Gewindemutter
- D_{ga}: Außendurchmesser Gewindeteil
- V: radialer Versatz

## Patentansprüche

1. Gewindespindel (10)
mit einem Antriebsteil (20), der eine Längsachse (A) aufweist und durch ein erstes Lager (70) gelagert ist,
mit einem Gewindeteil (30), der ebenfalls eine Längsachse (B) aufweist, und mit einer Gewindemutter (50), die durch ein zweites Lager (80a; 80b) gelagert ist und in der der Gewindeteil (30) geführt ist,
wobei der Antriebsteil (20) und der Gewindeteil (30) als separate Teile ausgebildet sind, welche jeweils mit wenigstens einem Kopplungselement (25, 55) versehen sind, die durch Zusammenstecken gelenkig mit einander verbindbar oder verbunden sind,
so dass ein gegenseitiger radialer Versatz (V) oder Neigungswinkel (a) der Längsachsen (A, B) des Antriebsteils (20) und des Gewindeteils (30) kompensierbar ist,
**dadurch gekennzeichnet, dass**
die Kopplungselemente (25, 55) jeweils nach Art einer Keilnutverzahnung ausgebildet sind, so dass im zusammengesteckten Zustand beide Verzahnungen miteinander kämmen und dass
für das Zusammenstecken von Antriebsteil (20) und Gewindeteil (30) ein Raster für mehrere Steckpositionen vorhanden ist, so dass der Antriebsteil (20) und der Gewindeteil (30) in unterschiedlich radial versetzten Positionen zusammengesteckt werden können.

2. Gewindespindel (10) nach Anspruch 1, **dadurch gekennzeichnet, dass** die Gewindemutter (50) wenigstens ein in Umfangsrichtung wirkendes Anschlagelement (53) aufweist, das in einer Anschlagposition mit wenigstens einem in Umfangsrichtung wirkenden Anschlagelement (23) des Antriebsteils (20) zusammenwirkt.

3. Gewindespindel (10) nach Anspruch 2, **dadurch gekennzeichnet, dass** auch bei einem radialen Versatz (V) der Längsachsen (A, B) in der Anschlagposition die Anschlagelemente (23, 53) einander berühren und zwischen einer Stirnseite (57) der Gewindemutter (50) und einem Anschlagkopf (21) des Antriebsteils (20) mindestens ein geringer Abstand besteht.

4. Gewindespindel (10) nach Anspruch 2 oder 3, **dadurch gekennzeichnet, dass** die Anschlagelemente (23, 53) in mindestens einem Kreisring angeordnet sind, dessen beide Durchmesser größer als ein Gewindeaußendurchmesser (D_{ga}) des Gewindeteils (30) bzw. kleiner als ein Außendurchmesser (Dₘₐ) der Gewindemutter (50) sind.

5. Gewindespindel (10) nach einem der Ansprüche 2 bis 4, **dadurch gekennzeichnet, dass** das Anschlagelement (23 oder 53) an dem Antriebsteil (20) oder Gewindeteil (30) ein Nocken (24) od. dgl. ist.

6. Gewindespindel (10) nach Anspruch 5, **dadurch gekennzeichnet, dass** das Gewinde (31) des Gewindeteils (30) eine Steigung (P) aufweist, welche größer als eine Höhe (H) des Nockens (24) ist.

7. Gewindespindel (10) nach Anspruch 5 oder 6, **dadurch gekennzeichnet, dass** der Nocken (24) von einer Stirnseite (58) des Antriebsteils (20) vorsteht und radial eine Anschlagfläche (26) aufweist und dass an der Gewindemutter (50) eine korrespondierende Anschlagvertiefung (54) angebracht ist, oder umgekehrt.

8. Gewindespindel (10) nach einem der Ansprüche 5 bis 7, **dadurch gekennzeichnet, dass** der Nocken (24) so angebracht ist, dass in zusammengestecktem Zustand zwischen dem Antriebsteil (20) und dem Gewindeteil (30) 360° vor der Anschlagposition eine Montagedistanz (M) zwischen dem Antriebsteil (20) und der Gewindemutter (50) geringfügig größer ist als die Steigung (P) des Gewindes (52) der Gewindemutter (50).

9. Gewindespindel (10) nach einem der vorhergehenden Ansprüche, **dadurch gekennzeichnet, dass** das Gewinde (31, 52) ein Kugelgewinde oder ein anderes reibungsarmes Gewinde ist.

10. Gewindespindel (10) nach einem der vorhergehenden Ansprüche, **dadurch gekennzeichnet, dass** die Kopplungselemente (25, 55) mit geringem Spiel ausgelegt sind.

11. Gewindespindel (10) nach einem der vorhergehenden Ansprüche, **dadurch gekennzeichnet, dass** das Kopplungselement (25) des Antriebsteils (20) einen Sprengring (61) als Verliersicherung (60) aufweist.

12. Sicherheitssystem mit einer Gewindespindel (10) nach einem der Ansprüche 1 bis 11.

13. Sicherheitssystem nach Anspruch 12 **dadurch gekennzeichnet, dass** das Sicherheitssystem ein Bremssystem für ein Fahrzeug ist.

14. Sicherheitssystem nach Anspruch 12 **dadurch gekennzeichnet, dass** das Sicherheitssystem ein Lenksystem für ein Fahrzeug ist.

## Claims

1. A threaded spindle (10)
comprising a drive part (20) which has a longitudinal axis (A) and which is mounted by a first bearing (70),
comprising a threaded part (30) which also has a longitudinal axis (B),
and comprising a threaded nut (50) which is mounted by a second bearing (80a; 80b) and in which the threaded part (30) is guided,
wherein the drive part (20) and the threaded part (30) are configured as separate parts which in each case are provided with at least one coupling element (25, 55) which are able to be connected or are connected to one another in an articulated manner by being plugged together,
so that a mutual radial offset (V) or angle of inclination (a) of the longitudinal axes (A, B) of the drive part (20) and of the threaded part (30) is able to be compensated,
**characterised in that**
the coupling elements (25, 55) in each case are configured in the manner of a spline toothing, such that in the plugged-together state both toothings mesh with one another and **in that**
for the plugging together of the drive part (20) and the threaded part (30) a pattern of a plurality of plug-in positions is provided, so that the drive part (20) and the threaded part (30) may be plugged together in positions which are differently radially offset.

2. The threaded spindle (10) according to claim 1, **characterised in that** the threaded nut (50) has at least one stop element (53) which acts in the circumferential direction and which in a stop position cooperates with at least one stop element (23) of the drive part (20) acting in the circumferential direction.

3. The threaded spindle (10) according to claim 2, **characterised in that** even with a radial offset (V) of the longitudinal axes (A, B) in the stop position, the stop elements (23, 53) are in contact with one another and at least a small spacing is present between a front face (57) of the threaded nut (50) and a stop head (21) of the drive part (20).

4. The threaded spindle (10) according to claim 2 or 3, **characterised in that** the stop elements (23, 53) are arranged in at least one circular ring, the two diameters thereof being larger than an external thread diameter (D_{ga}) of the threaded part (30) and/or are smaller than an external diameter (Dₘₐ) of the threaded nut (50) .

5. The threaded spindle (10) according to one of claims 2 to 4, **characterised in that** the stop element (23 or 53) on the drive part (20) or threaded part (30) is a cam (24) or the like.

6. The threaded spindle (10) according to claim 5, **characterised in that** the thread (31) of the threaded part (30) has a pitch (P) which is larger than a height (H) of the cam (24).

7. The threaded spindle (10) according to claim 5 or 6, **characterised in that** the cam (24) protrudes from a front face (58) of the drive part (20) and radially has a stop surface (26) and **in that** a corresponding stop recess (54) is applied to the threaded nut (50) or vice-versa.

8. The threaded spindle (10) according to one of claims 5 to 7, **characterised in that** the cam (24) is applied such that in the plugged-together state, between the drive part (20) and the threaded part (30) 360° before the stop position, a mounting distance (M) between the drive part (20) and the threaded nut (50) is slightly larger than the pitch (P) of the thread (52) of the threaded nut (50).

9. The threaded spindle (10) according to one of the preceding claims, **characterised in that** the thread (31, 52) is a recirculating ball screw or a different low-friction thread.

10. The threaded spindle (10) according to one of the preceding claims, **characterised in that** the coupling elements (25, 55) are designed with low clearance.

11. The threaded spindle (10) according to one of the preceding claims, **characterised in that** the coupling element (25) of the drive part (20) has a circlip (61) as a retaining means (60).

12. A safety system comprising a threaded spindle (10) according to one of claims 1 to 11.

13. The safety system according to claim 12, **characterised in that** the safety system is a braking system for a vehicle.

14. The safety system according to claim 12, **characterised in that** the safety system is a steering system for a vehicle.

## Revendications

1. Broche filetée (10)
avec une partie d'entraînement (20), qui comporte un axe longitudinal (A) et est logé à travers un premier palier (70),
avec une partie filetée (30), qui comporte également un axe longitudinal (B)
et avec un écrou fileté (50), qui est logé à travers un deuxième palier (80a ; 80b) et dans lequel la partie filetée (30) est guidée,
sachant que la partie d'entraînement (20) et la partie filetée (30) sont constituées sous la forme de pièces séparées, lesquelles sont respectivement dotées d'au moins un élément de couplage (25, 55), qui peuvent être ou sont reliées l'une à l'autre de façon articulée par emboîtement,
de telle sorte qu'un déport radial réciproque (V) ou un angle d'inclinaison (α) des axes longitudinaux (A, B) de la partie d'entraînement (20) et de la partie filetée (30) peut être compensé,
**caractérisée en ce que**
les éléments de couplage (25, 55) sont respectivement constitués sous la forme d'une cannelure de telle sorte qu'à l'état emboîté les deux dentures s'engrènent l'une dans l'autre et **en ce que**
pour l'emboîtement de la partie d'entraînement (20) et de la partie filetée (30), il existe un crantage pour plusieurs positions d'emboîtement de telle sorte que la partie d'entraînement (20) et la partie filetée (30) peuvent être emboîtées dans des positions radialement déportées de façon différente.

2. Broche filetée (10) selon la revendication 1, **caractérisée en ce que** l'écrou fileté (50) comporte au moins un élément de butée (53) agissant dans la direction périphérique, qui coopère dans une position de butée avec au moins un élément de butée (23) de la partie d'entraînement (20) agissant dans la direction périphérique.

3. Broche filetée (10) selon la revendication 2, **caractérisée en ce que** les éléments de butée (23, 53) se touchent les uns les autres même avec un déport radial (V) des axes longitudinaux (A, B) dans la position de butée et qu'il y a au moins un faible intervalle entre un côté frontal (57) de l'écrou fileté (50) et une tête de butée (21) de la partie d'entraînement (20).

4. Broche filetée (10) selon la revendication 2 ou 3, **caractérisée en ce que** les éléments de butée (23, 53) sont disposés dans au moins un anneau circulaire, dont les deux diamètres sont plus grands qu'un diamètre extérieur de filetage (D_{ga}) de la partie filetée (30) ou plus petits qu'un diamètre extérieur (Dₘₐ) de l'écrou fileté (50).

5. Broche filetée (10) selon l'une quelconque des revendications 2 à 4, **caractérisée en ce que** l'élément de butée (23 ou 53) sur la partie d'entraînement (20) ou la partie filetée (30) est une came (24) ou un élément analogue.

6. Broche filetée (10) selon la revendication 5, **caractérisée en ce que** le filetage (31) de la partie filetée (30) comporte un pas (P), lequel est plus grand qu'une hauteur (H) de la came (24).

7. Broche filetée (10) selon la revendication 5 ou 6, **caractérisée en ce que** la came (24) fait saillie d'un côté frontal (58) de la partie d'entraînement (20) et comporte radialement une surface de butée (26) et **en ce qu'**une cavité de butée (54) correspondante est placée sur l'écrou fileté (50) ou inversement.

8. Broche filetée (10) selon l'une quelconque des revendications 5 à 7, **caractérisée en ce que** la came (24) est montée de telle manière qu'à l'état emboîté entre la partie d'entraînement (20) et la partie filetée (30) 360° avant la position de butée, une distance de montage (M) entre la partie d'entraînement (20) et l'écrou fileté (50) est légèrement plus grande que le pas (P) du filetage (52) de l'écrou fileté (50).

9. Broche filetée (10) selon l'une quelconque des revendications précédentes, **caractérisée en ce que** le filetage (31, 52) est un filetage pour billes ou un autre filetage à faible frottement.

10. Broche filetée (10) selon l'une quelconque des revendications précédentes, **caractérisée en ce que** les éléments de couplage (25, 55) sont conçus avec un faible jeu.

11. Broche filetée (10) selon l'une quelconque des revendications précédentes, **caractérisée en ce que** l'élément de couplage (25) de la partie d'entraînement (20) comporte un jonc d'arrêt (61) en tant que sécurité antiperte (60).

12. Système de sécurité avec une broche filetée (10) selon l'une quelconque des revendications 1 à 11.

13. Système de sécurité selon la revendication 12, **caractérisé en ce que** le système de sécurité est un système de freinage pour un véhicule.

14. Système de sécurité selon la revendication 12, **caractérisé en ce que** le système de sécurité est un système de direction pour un véhicule.
